# EUROPÄISCHE PATENTSCHRIFT

(11) **EP 3 149 422 B1**
(45) Veröffentlichungstag und Bekanntmachung des Hinweises auf die Patenterteilung: **01.05.2019**
(21) Anmeldenummer: 15729328.3
(22) Anmeldetag: 27.05.2015
(51) Int. Cl.: F27B 7/20, C04B 7/43, F27D 17/00

(54) **VORRICHTUNG ZUR HERSTELLUNG VON ZEMENTKLINKER**
APPARATUS FOR PRODUCING CEMENT CLINKER
DISPOSITIF DE FABRICATION DE CLINKER

(30) Priorität: 27.05.2014 AT 500822014
(43) Veröffentlichungstag der Anmeldung: 05.04.2017
(73) Patentinhaber: Scheuch GmbH, 4971 Aurolzmünster (AT)
(72) Erfinder: LISBERGER, Manfred, 4752 Riedau (AT)
(74) Vertreter: Sonn & Partner Patentanwälte
(86) Internationale Anmeldenummer: PCT/AT2015/050136
(87) Internationale Veröffentlichungsnummer: WO 2015/179892

(56) Entgegenhaltungen:
- EP-A1- 2 287 126
- EP-B1- 2 545 337
- WO-A1-2009/110356
- DE-A1- 19 713 068

## Beschreibung

Die Erfindung betrifft eine Vorrichtung zur Herstellung von Zementklinker, mit einem Ofen zum Brennen von Rohmaterialien zu Zementklinker, mit einer Vorwärmstufe zum Vorwärmen der Rohmaterialien im Gegenstrom zu Ofenabgasen, mit einem Klinkerkühler zum Kühlen des Zementklinkers, mit einer Entstickungsstufe zum Entsticken von Ofenabgasen, mit einem Wärmetauscher zum Erwärmen der Ofenabgase vor der Entstickungsstufe durch Wärmeaustausch mit einem Wärmeaustauschmedium, mit zumindest einem weiteren Wärmetauscher zum Erwärmen des Wärmeaustauschmediums durch Wärmeaustausch mit Ofenabgasen oder Abluft des Klinkerkühlers, wobei der Wärmetauscher über eine Leitung für das Wärmeaustauschmedium mit dem weiteren Wärmetauscher verbunden ist.

Aus der EP 2 545 337 B1 ist eine solche Vorrichtung für die Zementklinkerherstellung bekannt, bei welcher das (gegebenenfalls gekühlte) Rauchgas nach einem Vorwärmer in einem Rauchgasfilter entstaubt und danach einer sogenannten SCR-("Selektive Katalytische Reduktion")-Anlage zur katalytischen Entstickung zugeführt wird. Vor der Entstickung wird das entstaubte Rauchgas mittels Wärmetauschern auf die erforderliche Temperatur gebracht. Der eine Wärmetauscher ist über einen Kreislauf für ein Wärmeträgerfluid mit dem anderen Wärmetauscher verbunden, welcher dem Klinkerkühler nachgeschaltet ist. Ein Teil der im Klinkerkühler erwärmten Luft wird über einen Mittenluftabgriff aus dem Klinkerkühler abgeführt. Dieser Abluftstrom wird in einem Zyklon einer Grobentstaubung unterzogen, bevor die entstaubte Abluft zur Erwärmung des Wärmeträgerfluids in dem Wärmetauscher auf Seite des Klinkerkühlers genutzt wird. Das erwärmte Wärmeträgerfluid wird dem Wärmetauscher vor der SCR-Anlage zugeführt. Demnach ist es aus diesem Stand der Technik bereits bekannt, die Wärme der Abluft für das Wärmeverschiebungssystem der SCR-Anlage zu verwenden. Die Abluft wird zunächst entstaubt und danach einem Wärmetauscher zugeführt, welcher über ein Wärmeträgerfluid mit einem weiteren Wärmetauscher vor der SCR-Anlage kommuniziert.

Nachteiligerweise wird jedoch bei diesem Stand der Technik in den Abluftstrom ein Zyklon eingesetzt, um den Staubgehalt vor dem Wärmetauscher zu reduzieren. Bei dieser Ausführung liegt jedoch weiter eine Staubbeladung der Abluft von beispielsweise mehreren Gramm pro Normkubikmeter Luft vor. Ein wesentlicher Nachteil dieser Ausführung ist daher, dass der Einsatz des Zyklon mit wirtschaftlich vertretbaren Druckverlusten keine Reingasstaubgehalte im Bereich von unter 100 mg/Nm³ erreichen lässt. In der verfahrenstechnischen und konstruktiven Auslegung des Wärmetauschers in der Abluftleitung waren daher der Verschleiß der Rohre und mögliche Staubablagerungen (sogenanntes Fouling oder Scaling) zu berücksichtigen, um die erforderliche Leistung der Wärmeverschiebung zu erreichen. Diese Reserven führen dazu, dass die Wärmetauscher entsprechend größer dimensioniert werden müssen, da andernfalls die gewünschte Leistung im laufenden Betrieb nicht übertragen werden könnte.

Die EP 2 287 126 A1 beschreibt eine Zementklinkeranlage, bei welcher die Abgase zunächst durch einen Zyklon und danach durch ein Hochtemperatur-Schlauchfilter geführt werden, bevor die Abgase einem Kamin zugeführt werden. In einer Ausführung ist stromabwärts des Hochtemperatur-Schlauchfilters ein Wärmetauscher zum Abkühlen der Abgase auf eine Temperatur zwischen 150°C und 400°C vorgesehen, damit die Abgase in einem Katalysator behandelt werden können. Demnach kann dieser Stand der Technik nicht dazu beitragen, die Wärmeenergie der Abgase für das Wärmeverschiebungssystem einer Entstickungsstufe zu nutzen.

Die EP 1 649 922 A1 beschreibt eine herkömmliche Zementklinkeranlage mit einer Entstickungsvorrichtung, bei welcher je ein Wärmetauscher vor bzw. nach einem Entstickungsturm angeordnet ist.

In der US 8, 765, 066 B2 ist eine weitere gattungsgemäße Zementklinkeranlage offenbart.

Demgegenüber besteht die Aufgabe der vorliegenden Erfindung darin, die Nachteile des Standes der Technik zu lindern bzw. zu beheben. Die Erfindung setzt sich daher insbesondere zum Ziel, die Wärmeenergie von Ofenabgasen oder Klinkerkühlerabluft möglichst effizient und mit geringem baulichen Aufwand für das Wärmeverschiebungssystem der Entstickungsstufe zu nutzen.

Zur Lösung dieser Aufgabe ist eine Vorrichtung zur Herstellung von Zementklinker mit den Merkmalen von Anspruch 1 vorgesehen. Bevorzugte Ausführungen der Erfindung sind in den abhängigen Ansprüchen angegeben.

Erfindungsgemäß ist ein Heißgasfilter in Strömungsrichtung vor dem weiteren Wärmetauscher angeordnet.

Für die Zwecke dieser Offenbarung sind Heißgasfilter zur Entstaubung eines staubbeladenen Gasstromes bei Temperaturen von zumindest mehr als 260°C, vorzugsweise bei Temperaturen von zumindest 450°C, eingerichtet. Solche Heißgasfilter sind im Stand der Technik an sich bekannt. In der EP 2 545 337 B1 werden Heißgasfilter, mit denen etwa 450°C heiße Gase entstaubt werden können, jedoch als teuer und großvolumig bezeichnet. Aus diesem Grund wurde beim Stand der Technik der Einsatz solcher Heißgasfilter zugunsten einfacherer Schlauchfilter zum Entstauben der Abgase verworfen. Die Erfindung beruht demgegenüber auf der überraschenden Erkenntnis, dass die Anordnung eines solchen Heißgasfilters unmittelbar vor dem weiteren Wärmetauscher besondere Vorteile bringt. Dadurch kann eine effiziente und sichere Staubabscheidung bei Temperaturen über 260°C erreicht werden, welche den Einsatz eines kompakten, effizienten Wärmetauschers für die Aufnahme der Abgas- oder Abluftwärme ermöglicht. Bei Verwendung von herkömmlichen Abscheidern, wie Zyklonen, waren die Abscheidegrade regelmäßig auf bestenfalls 50-100 mg/Nm³ (Normkubikmeter) beschränkt, sodass der nachgeschaltete Wärmetauscher an solche Staubfrachten angepasst werden musste. Erfindungsgemäß kann hingegen der weitere Wärmetauscher nach dem Heißgasfilter wesentlich kompakter ausgelegt werden. Durch die fehlende Staubbelastung kann zudem zuverlässig verhindert werden, dass die Leistung der Wärmeverschiebung in Folge von Staubablagerungen, wie Fouling und Scaling, absinkt. Vorteilhafterweise kann so eine erhöhte Betriebssicherheit des gesamten Wärmeverschiebungssystems erzielt werden, mit welcher die Energiebilanz der gesamten Vorrichtung gesteigert werden kann. Somit kann eine Wärmeverschiebung von einer Strömung des Ofenabgases und/oder der Abluft des Klinkerkühlers bei hohen Temperaturen von mehr als 260°C effizient und wirtschaftlich realisiert werden. Das Wärmeaustauschmedium, beispielsweise Wasserdampf oder Thermoöl, wird dem Wärmetauscher vor der Entstickungsstufe zugeführt, mit welchem bevorzugt Wärmeverluste eines im Gegenstrom von Abgasen vor und nach der Entstickung durchströmten Wärmetauschermoduls kompensiert werden. Als Wärmetauschermodul kann ein Plattenwärmetauscher vorgesehen sein.

Gemäß einer bevorzugten Ausführung sind ein Heißgasfilter und ein weiterer Wärmetauscher in einer Ofenabgasleitung zwischen der Vorwärmstufe und einer Rohmühle zum Vermahlen der Rohmaterialien angeordnet.

Gemäß einer weiteren bevorzugten Ausführung sind ein Heißgasfilter und ein weiterer Wärmetauscher in einer Bypassleitung zum Abbau von Chloridfrachten aus einem Teilstrom der Ofenabgase angeordnet.

Aus dem Ofen wird kontinuierlich Zementklinker abgeführt, welcher üblicherweise mit einem Klinkerkühler gekühlt wird. Als Kühlmittel kann bevorzugt Luft verwendet werden, welche den Klinkerkühler als erhitzte Abluft verlässt.

Gemäß einer weiteren bevorzugten Ausführung der Erfindung sind ein Heißgasfilter und ein weiterer Wärmetauscher in einer Abluftleitung des Klinkerkühlers angeordnet. Vorteilhafterweise kann dadurch der weitere Wärmetauscher zur Aufnahme von Wärme der Abluft kompakt dimensioniert werden.

Zur Erzielung eines effizienten Wärmeverschiebungssystems kann es notwendig sein, wenn zumindest zwei weitere Wärmetauscher mit vorgeschalteten Heißgasfiltern in der Ofenabgasleitung und/oder in der Bypassleitung und/oder in der Abluftleitung des Klinkerkühlers vorgesehen sind, wobei die zumindest zwei weiteren Wärmetauscher über Abschnitte der Leitung für das Wärmeaustauschmedium mit dem Wärmetauscher vor der Entstickungsstufe verbunden sind. Bei dieser Ausführung weisen daher zumindest zwei verschiedene Leitungen die zur Wärmeverschiebung an den Wärmetauscher vor der Entstickungsstufe eingerichteten weiteren Wärmetauscher auf, wobei den weiteren Wärmetauschern je ein Heißgasfilter zur Filterung des betreffenden Abgas- bzw. Abluftstromes vorgeschaltet ist. Somit kann die Wärmeenergie der Abgas- bzw.

Abluftströme an verschiedenen Stellen der Vorrichtung auf das Wärmeaustauschmedium übertragen und zu dem Wärmetauscher vor der Entstickungsstufe transportiert werden. Dadurch können die Abgase zuverlässig auf die für die Entstickung erforderliche Temperatur gebracht werden. Die weiteren Wärmetauscher mit den vorgeschalteten Heißgasfiltern können über getrennte Leitungsabschnitte, insbesondere in Form von Zirkulationsleitungen, mit dem Wärmetauscher vor der Entstickungsstufe verbunden sein. Alternativ können die von den weiteren Wärmetauschern wegführenden Leitungsabschnitte für das Wärmeaustauschmedium in einem Zusammenführungsabschnitt zusammengeführt sein, wobei der Zusammenführungsabschnitt mit dem Wärmetauscher vor der Entstickungsstufe verbunden ist.

Um die für die Wärmeverschiebung an den Wärmetauscher vor der Entstickungsstufe erforderliche Wärmeenergie zur Verfügung zu stellen, ist es günstig, wenn die Ofenabgasleitung und/oder die Bypassleitung und/oder die Abluftleitung eine Abzweigung zum Abzweigen eines Teilstroms der Ofenabgase bzw. der Abluft an den weiteren Wärmetauscher aufweist. Bei dieser Ausführung wird daher nur ein Teil der Abgase bzw. der Abluft in der betreffenden Leitung, d.h. in der Ofenabgasleitung, Bypassleitung oder Abluftleitung, abgezweigt, um das Wärmeaustauschmedium in dem zugehörigen weiteren Wärmetauscher zu erwärmen und danach das erwärmte Wärmeaustauschmedium dem Wärmetauscher vor der Entstickungsstufe zuzuführen.

Um die für das Wärmeverschiebungssystem erforderliche Wärmeenergie an den momentanen Betriebszustand anpassen zu können, ist es von Vorteil, wenn die Abzweigung mit einer Steuer- bzw. Regeleinrichtung zur Einstellung des Volumenstroms der Ofenabgase bzw. der Abluft des Klinkerkühlers in der Abzweigung verbunden ist. Die Steuer- bzw. Regeleinrichtung kann ein im Stand der Technik übliches Steuergerät aufweisen, mit welchem ein den Volumenstrom einstellendes Steuer- bzw. Regelventil an der Abzweigung angesteuert wird.

Zum Entfernen von Staub aus dem Abgas- bzw. Abluftstrom bei hohen Temperaturen ist es vorteilhaft, wenn das Heißgasfilter zumindest ein von Ofenabgasen bzw. Abluft des Klinkerkühlers durchströmbares Filterelement, vorzugsweise aus einem keramischen Werkstoff, aufweist, wobei bevorzugt mehrere im Wesentlichen vertikal angeordnete Filterelemente vorgesehen sind. Derartige Heißgasfilter sind im Stand der Technik allgemein bekannt, wobei beispielhaft auf die DE 19 713 068 A1 verwiesen wird.

Bei einer bevorzugten Ausführung ist das Heißgasfilter mit einem Austragorgan zum Austragen von an dem Filterelement abgeschiedenen Staub verbunden. Vorzugsweise ist ein mechanisches Austragorgan, beispielsweise eine Förderschnecke vorgesehen, welche unterhalb des Filterelements angeordnet ist.

Um die Funktion des Heißgasfilters im Dauerbetrieb zu gewährleisten, ist es günstig, wenn das Heißgasfilter eine Zuführung für ein Reingas zur Abreinigung des Filterelements aufweist. Bei dieser Ausführung ist es günstig, wenn das Heißgasfilter mit reingasseitigen Klappen ausgestattet ist, um die Filterelemente im strömungslosen Zustand abzureinigen und dadurch die Standzeit der keramischen Filterelemente zu verlängern.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:

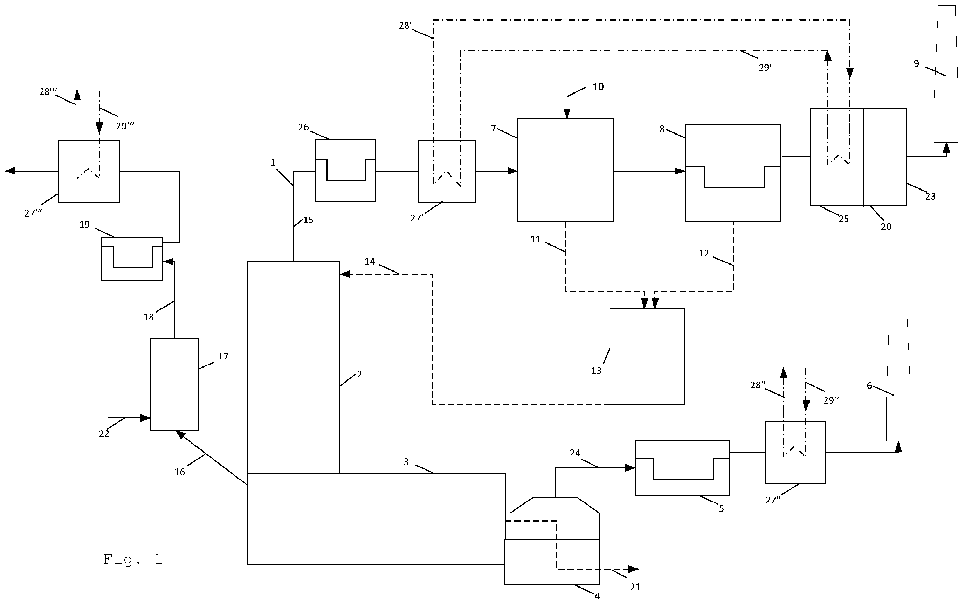

Fig. 1 ein Schema einer erfindungsgemäßen Vorrichtung zur Herstellung von Zementklinker aus Rohmehl mit einer SCR-Entstickungsstufe, bei welcher zum Ausgleich von Wärmeverlusten eines Plattenwärmetauschers zum Erwärmen der Abgase vor der Entstickung ein Wärmeverschiebungssystem vorgesehen ist, welches mit einem Wärmetauscher vor der SCR-Entstickungsstufe verbundene weitere Wärmetauscher zur Ausnutzung der Wärme von Ofenabgasen bzw. der Abluft eines Klinkerkühlers aufweist, wobei den weiteren Wärmetauschern jeweils ein Heißgasfilter zur Filterung der Ofenabgase bzw. der Abluft bei Temperaturen von mehr als 450°C vorgeschaltet ist;
Fig. 2 schematisch die Entstickungsstufe der Vorrichtung gemäß Fig. 1, wobei die Wärmeverluste des Plattenwärmetauschers mit dem Wärmetauscher des Wärmeverschiebungssystems ausgeglichen werden; und
Fig. 3 schematisch eine Ausführung des Heißgasfilters der Vorrichtung gemäß Fig. 1;
In Fig. 1 ist ein Fließschema einer Vorrichtung zur Herstellung von Zementklinker aus Rohmaterialien in Form von Rohmehl gezeigt, wobei zunächst die im Stand der Technik an sich bekannten Anlagenkomponenten beschrieben werden. Die Vorrichtung weist insbesondere einen (Drehrohr-)Ofen 3 auf, in welchem die Rohstoffe zur Herstellung des Zementklinkers gebrannt werden. Der Drehrohrofen 3 ist zwischen einem Klinkerkühler 4 und einer Vorwärmstufe 2 angeordnet. Die Vorwärmstufe 2 weist mehrere Zyklone (nicht gezeigt) auf, mit welchen die Rohstoffe vorgewärmt werden. Zu diesem Zweck werden die Rohmaterialien über eine Materialaufgabe 14 in die Vorwärmstufe 2 aufgegeben. Nach dem Gegenstromprinzip gelangt das Rohmaterial in den Drehrohrofen 3, wohingegen die bei der Verbrennung entstehenden Ofenabgase bzw. Rauchgase 1 gegen den Strom des Rohmaterials durch die Vorwärmstufe 2 strömen. Die Materialien werden dabei von den Zyklonen abgeschieden, auf bis zu 800°C aufgeheizt und in Richtung des Drehrohrofens 3 transportiert. Das Ofenabgas 1 wird gleichzeitig von ca. 850°C auf 300°C bis 400°C abgekühlt. Bevor die Rohmaterialien in den Drehrohrofen 3 gelangen, ist in modernen Anlagen ein sogenannter Calzinator (nicht eingezeichnet) eingebaut, der über eine separate Feuerung verfügt und die Aufgabe hat, den Kalkstein durch hohe Temperaturen und ausreichend Verweilzeit zu entsäuern. Im Drehrohrofen 3 werden die Rohstoffe weiter aufgeheizt und schließlich bei Materialtemperaturen von bis zu 1600°C zu Klinker gesintert, wobei sich dabei typische Klinkerphasen (Calcium-Aluminium-Silikate) bilden.

Nach der Vorwärmstufe 2 werden die Abgase 1 über eine Steigleitung 15 ("Down Comer Duct") in eine Rohmühle 7, in welcher frisches Rohmaterial 10 vor dem Einsatz im Prozess vermahlen und getrocknet wird. Die Abgase 1, welche mit einer Temperatur von 280 bis 450°C aus der Vorwärmstufe 2 austreten, werden zur Trocknung der Rohmaterialien und Brennstoffe in der Rohmühle 7 eingesetzt. Entstehendes Rohmehl 11 wird einem Homogenisierungssilo 13 zugeführt, welches mit der Materialaufgabe 14 für die Vorwärmstufe 2 verbunden ist. Die Abgase werden nach dem Durchströmen der Rohmühle 7 in eine Filterstufe 8 geleitet und entstaubt. Die Filterstufe 8 kann durch Schlauchfilter oder Elektrofilter gebildet sein. Abgeschiedener Filterstaub 12 wird in das Homogenisierungssilo 13 geleitet. Nach der Filterstufe 8 gelangen die entstickten und entstaubten Abgase 1 über einen Kamin 9 in die Atmosphäre.

Wie aus Fig. 1 weiters ersichtlich, wird aus dem Drehrohrofen 3 Klinker 21 abgeführt, welcher in dem Klinkerkühler 4 mit Frischluft auf bis zu 200°C gekühlt wird. Ein Großteil der Frischluft wird im Prozess als Sekundär- und Tertiärluft für die Verbrennung verwendet und ein Teil verlässt den Klinkerkühler als Abluft 24 mit Temperaturen zwischen 200°C und 500°C. Die Abluft 24 wird schließlich über einen Abluftkamin 6 in die Atmosphäre abgegeben.

In modernen Zementwerken werden zunehmend konventionelle Brennstoffe wie Kohlestaub, Erdgas oder Heizöl durch alternative Brennstoffe ersetzt. Der vermehrte Einsatz von alternativen Brennstoffen führt dazu, dass sich die Konzentrationen von Alkalien oder Chloriden im Produktionsprozess erhöhen. Die physikalischen Eigenschaften der Chloridverbindungen führen dazu, dass sie in heißen Bereichen des Ofens verdampfen und mit dem Abgas in kältere Zonen transportiert werden, wo sie wiederum am Heißmehl kondensieren können. In weiterer Folge bilden sich Chloridkreisläufe aus, die zu Verstopfungen in den Rohrleitungen führen können. Um die Chloridfrachten abzubauen, weist die Vorrichtung 1 einen Chloridbypass 16 auf, welchem ein Teil des aus dem Drehrohrofen 3 austretenden Rauchgases unter Umgehung der Vorwärmstufe 2 mit einer Temperatur von beispielsweise ca. 1000°C zugeführt wird. Das heiße Abgas wird in einer Quenchstufe 17 mit Frischluft 22 auf ca. 400°C gekühlt. Die Chloride sind nun vorwiegend am Staub gebunden. Das Bypassabgas 18 kann in eine zweite Quenchstufe (nicht gezeigt) geleitet werden, mit welcher die Temperatur des Bypassabgases weiter abgesenkt wird, um eine effiziente Entstaubung in einem Schlauch- oder Elektrofilter (nicht gezeigt) bei Temperaturen unterhalb von 250°C zu ermöglichen. Das gereinigte Bypassabgas kann dann über einen eigenen Bypassabgaskamin oder über den Kamin 9 des Drehrohrofens 3 abgeleitet werden.

Wie aus Fig. 1 weiters ersichtlich, weist die Vorrichtung zudem eine Entstickungsstufe 20 auf, welche als an sich übliche SCR-Anlage ("Selektive Katalytische Reduktion") zum Umsetzen von Stickoxiden NO_{X} in unschädliche Verbindungen vor der Abgabe über den Kamin 9 ausgebildet ist. Zu diesem Zweck weist die Entstickungsstufe 20 zumindest einen Reduktionskatalysator 23 auf, in welchem durch entsprechende katalytische Reaktion die Stickoxide NO_{X} zum Teil in Stickstoff N₂ und Wasser H₂O umgewandelt werden. Um die Standzeiten der Entstickungsstufe 20 zu erhöhen, ist die Entstickungsstufe 20 zwischen der Filterstufe 8 und dem Kamin 9 angeordnet.

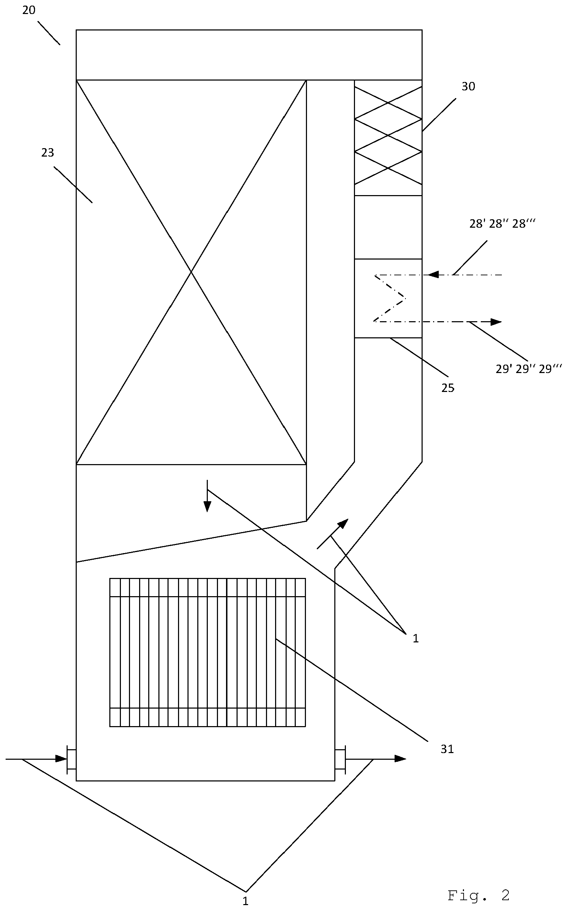

Wie aus Fig. 2 ersichtlich, ist der Entstickungsstufe 20 ein Wärmetauschermodul 31 vorgeschaltet, mit welchem die Ofenabgase nach der Entstaubung auf die für den Katalysator 23 erforderlichen Temperaturen von üblicherweise 160°C bis 550°C gebracht werden. In der gezeigten Ausführung ist als Wärmetauschermodul 31 ein Plattenwärmetauscher vorgesehen, welcher in der einen Richtung von den Ofenabgasen 1 vor deren Entstickung und in der anderen Richtung von den Ofenabgasen 1 nach deren Entstickung durchströmt wird. Dadurch kann die Wärme der ausströmenden Ofenabgase 1 zum Vorwärmen der einströmenden Ofenabgase 1 genutzt werden. Die unvermeidlichen Energieverluste in dem Wärmetauschermodul 31 müssen durch eine externe Energiequelle ausgeglichen werden. Als Energiequelle ist in der gezeigten Ausführung ein mit einem Wärmeaustauschmedium wie Dampf oder Thermoöl betriebener Wärmetauscher 25 vorgesehen. Der Wärmetauscher 25 ist zwischen dem Wärmetauschermodul 31 und einer Einrichtung 30 zum Eindüsen und Verteilen eines Reduktionsmittels vorgesehen.

Solche Vorrichtungen zur Herstellung von Zementklinker sind im Stand der Technik allgemein bekannt, wobei die Vorrichtung in der gezeigten Ausführungsform zusätzliche Anlagenkomponenten aufweist, die im Folgenden erläutert werden sollen.

Wie aus Fig. 1 ersichtlich, weist die Vorrichtung weitere Wärmetauscher 27', 27", 27'" auf, mit welchen die Wärme von Strömungen des Abgases 1 bzw. der Abluft 24 des Klinkerkühlers 4 zum Erwärmen eines Wärmeaustauschmediums genutzt wird, das dem Wärmetauscher 25 zum Ausgleich der Wärmeverluste des Wärmetauschermoduls 31 zugeführt wird. Die weiteren Wärmetauscher 27', 27", 27'" sind über das Wärmeaustauschmedium transportierende Leitungen 28', 29'; 28", 29"; 28"', 29'" mit dem Wärmetauscher 25 vor der Entstickungsstufe 20 verbunden. Die Leitungen 28', 29'; 28", 29''; 28"', 29'" sind als Zirkulationsleitungen ausgebildet, welche jeweils eine das erhitzte Wärmeaustauschmedium von dem weiteren Wärmetauscher 27', 27", 27'" zu dem Wärmetauscher 25 transportierende Zuleitung 28'; 28"; 28'" und eine das abgekühlte Wärmeaustauschmedium vom Wärmetauscher 25 zu dem weiteren Wärmetauscher 27', 27", 27'" führende Ableitung 29'; 29''; 29'" aufweisen.

Wie aus Fig. 1 ersichtlich, weist die Vorrichtung in der gezeigten Ausführung je ein Heißgasfilter 26, 5, 19 in Strömungsrichtung des betreffenden Gasstromes, d.h. des Abgases oder der Abluft des Klinkerkühlers 4, unmittelbar vor dem weiteren Wärmetauscher 27', 27", 27'" auf. Für die Zwecke dieser Offenbarung soll die "unmittelbare" Anordnung des Heißgasfilters 26, 5, 19 vor dem weiteren Wärmetauscher 27', 27", 27'" insbesondere bedeuten, dass der betreffende Ofenabgas- oder Abluftstrom nach der Entstaubung in dem Heißgasfilter 26, 5, 19 ohne Durchströmung anderer Anlagenkomponenten in den weiteren Wärmetauscher 27', 27", 27'" geführt wird, um einen Teil der in den Ofenabgasen 1 bzw. in der Abluft des Klinkerkühlers 4 gespeicherten Wärme an das Wärmeaustauschmedium abzugeben.

Wie aus Fig. 1 ersichtlich, ist ein Heißgasfilter 26 vor einem weiteren Wärmetauscher 27' in der Ofenabgasleitung zwischen der Vorwärmstufe 2 und einer Rohmühle 7 zum Vermahlen der Rohmaterialien angeordnet.

Wie aus Fig. 1 ersichtlich, ist zudem ein Heißgasfilter 19 vor einem weiteren Wärmetauscher 27'" in der Bypassleitung 16 zum Abbau von Chloridfrachten aus einem Teilstrom der Ofenabgase angeordnet.

Wie aus Fig. 1 ersichtlich, ist schließlich ein weiterer Heißgasfilter 5 vor einem weiteren Wärmetauscher 27" in der Abluftleitung des Klinkerkühlers 4 angeordnet.

Die Leitungen 28", 29" des weiteren Wärmetauschers 27" in der Abluftleitung des Klinkerkühlers 4 und die Leitungen 28"', 29'" des weiteren Wärmetauschers 27'" in der Bypassleitung 16 können in Zusammenführungsabschnitten mit den Leitungen 28', 29' des weiteren Wärmetauschers 27' in der Ofenabgasleitung zusammengeführt sein (nicht gezeigt). Darüber hinaus kann die Ofenabgasleitung und/oder die Bypassleitung und/oder die Abluftleitung eine (nicht gezeigte) Abzweigung aufweisen, mit welcher lediglich ein Teilstrom der betreffenden Strömung der Ofenabgase bzw. der Abluft an den weiteren Wärmetauscher 27', 27", 27'" abgezweigt wird. Bei dieser Ausführung kann die Abzweigung mit einer (nicht gezeigten) Steuer- bzw. Regeleinrichtung zur Einstellung des Volumenstroms der Ofenabgase bzw. der Abluft des Klinkerkühlers in der Abzweigung verbunden sein.

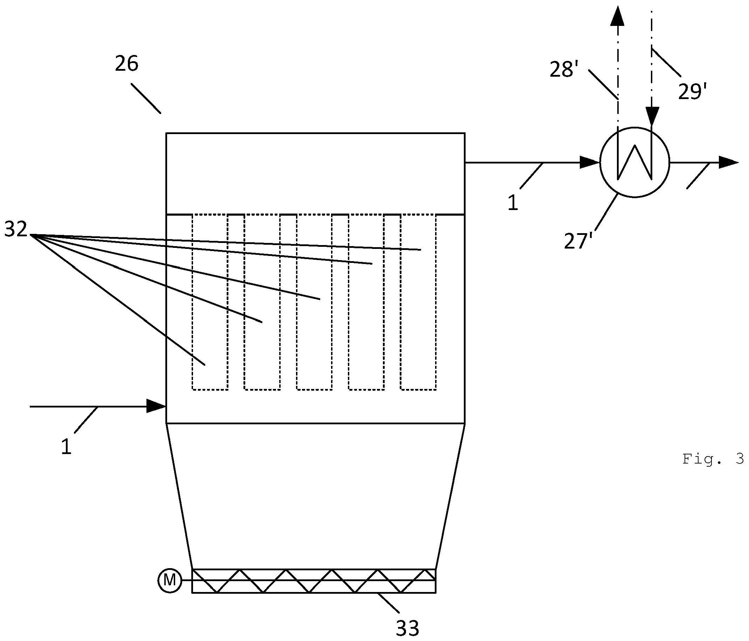

Wie aus Fig. 3 ersichtlich, weist das Heißgasfilter 26 (die anderen Heißgasfilter 5, 19 sind entsprechend aufgebaut) mehrere Filterelemente 32 auf, welche zur Abscheidung der Staubfrachten von dem zugehörigen Gasstrom, hier von den Ofenabgasen 1, durchströmt werden. In der gezeigten Ausführung sind keramische Filterelemente vorgesehen. Zudem ist in Fig. 3 ersichtlich, dass das Heißgasfilter 26 mit einem mechanischen Austragorgan 33 zum Austragen des an den Filterelementen 32 abgeschiedenen Staubes verbunden ist. Darüber hinaus kann das Heißgasfilter 26, 5, 19 eine Zuführung für ein Reingas zur Abreinigung der Filterelemente 32 aufweisen (nicht gezeigt).

## Patentansprüche

1. Vorrichtung zur Herstellung von Zementklinker, mit einem Ofen (3) zum Brennen von Rohmaterialien zu Zementklinker, mit einer Vorwärmstufe (2) zum Vorwärmen der Rohmaterialien im Gegenstrom zu Ofenabgasen, mit einem Klinkerkühler (4) zum Kühlen des Zementklinkers, mit einer Entstickungsstufe (23) zum Entsticken von Ofenabgasen, mit einem Wärmetauscher (25) zum Erwärmen der Ofenabgase vor der Entstickungsstufe (23) durch Wärmeaustausch mit einem Wärmeaustauschmedium, mit zumindest einem weiteren Wärmetauscher (27', 27", 27"') zum Erwärmen des Wärmeaustauschmediums durch Wärmeaustausch mit Ofenabgasen oder Abluft des Klinkerkühlers (4), wobei der Wärmetauscher (25) über eine Leitung (28', 29'; 28", 29"; 28"', 29"') für das Wärmeaustauschmedium mit dem weiteren Wärmetauscher (27', 27", 27"') verbunden ist, **dadurch gekennzeichnet, dass** ein Heißgasfilter (26, 5, 19) in Strömungsrichtung vor dem weiteren Wärmetauscher (27', 27", 27"') angeordnet ist.

2. Vorrichtung nach Anspruch 1, **dadurch gekennzeichnet, dass** ein Heißgasfilter (26) und ein weiterer Wärmetauscher (27') in einer Ofenabgasleitung zwischen der Vorwärmstufe (2) und einer Rohmühle (7) zum Vermahlen der Rohmaterialien angeordnet sind.

3. Vorrichtung nach Anspruch 1 oder 2, **dadurch gekennzeichnet, dass** ein Heißgasfilter (19) und ein weiterer Wärmetauscher (27"') in einer Bypassleitung (16) zum Abbau von Chloridfrachten aus einem Teilstrom der Ofenabgase angeordnet sind.

4. Vorrichtung nach einem der Ansprüche 1 bis 3, **dadurch gekennzeichnet, dass** ein Heißgasfilter (5) und ein weiterer Wärmetauscher (27'') in einer Abluftleitung des Klinkerkühlers (4) angeordnet sind.

5. Vorrichtung nach einem der Ansprüche 1 bis 4, **dadurch gekennzeichnet, dass** zumindest zwei weitere Wärmetauscher (27', 27", 27"') mit vorgeschalteten Heißgasfiltern (26, 5, 19) in der Ofenabgasleitung und/oder in der Bypassleitung (16) und/oder in der Abluftleitung des Klinkerkühlers (4) vorgesehen sind, wobei die zumindest zwei weiteren Wärmetauscher (27', 27", 27"') über Abschnitte der Leitung (28', 29'; 28", 29"; 28"', 29"') für das Wärmeaustauschmedium mit dem Wärmetauscher (25) vor der Entstickungsstufe (23) verbunden sind.

6. Vorrichtung nach einem der Ansprüche 1 bis 5, **dadurch gekennzeichnet, dass** die Ofenabgasleitung und/oder die Bypassleitung (16) und/oder die Abluftleitung eine Abzweigung zum Abzweigen eines Teilstroms der Ofenabgase bzw. der Abluft an den weiteren Wärmetauscher (27', 27", 27"') aufweist.

7. Vorrichtung nach Anspruch 6, **dadurch gekennzeichnet, dass** die Abzweigung mit einer Steuer- bzw. Regeleinrichtung zur Einstellung des Volumenstroms der Ofenabgase bzw. der Abluft des Klinkerkühlers (4) in der Abzweigung verbunden ist.

8. Vorrichtung nach einem der Ansprüche 1 bis 7, **dadurch gekennzeichnet, dass** das Heißgasfilter zumindest ein von Ofenabgasen bzw. Abluft des Klinkerkühlers (4) durchströmbares Filterelement (32), vorzugsweise aus einem keramischen Werkstoff, aufweist, wobei bevorzugt mehrere im Wesentlichen vertikal angeordnete keramische Filterelemente (32) vorgesehen sind.

9. Vorrichtung nach Anspruch 8, **dadurch gekennzeichnet, dass** das Heißgasfilter (26, 5, 19) mit einem Austragorgan (33) zum Austragen von an dem Filterelement (32) abgeschiedenen Staub verbunden ist.

10. Vorrichtung nach Anspruch 8 oder 9, **dadurch gekennzeichnet, dass** das Heißgasfilter (26, 5, 19) eine Zuführung für ein Reingas zur Abreinigung des Filterelements (32) aufweist.

## Claims

1. Device for producing cement clinker, comprising a kiln (3) for firing raw materials to form cement clinker, comprising a preheating stage (2) for preheating the raw materials in a counter flow to kiln exhaust gases, comprising a clinker cooler (4) for cooling the cement clinker, comprising a nitrogen oxide removal stage (23) for removing nitrogen oxide from kiln exhaust gases, comprising a heat exchanger (25) for heating the kiln exhaust gases, upstream of the nitrogen oxide removal stage (23), by means of heat exchange with a heat-exchange medium, comprising at least one additional heat exchanger (27', 27", 27"') for heating the heat-exchange medium by means of heat exchange with kiln exhaust gases or exhaust air from the clinker cooler (4), the heat exchanger (25) being connected to the additional heat exchanger (27', 27", 27"') by means of a line (28', 29'; 28", 29"; 28"', 29"') for the heat-exchange medium, **characterised in that** a hot-gas filter (26, 5, 19) is arranged upstream of the additional heat exchanger (27', 27", 27"') in the flow direction.

2. Device according to claim 1, **characterised in that** a hot-gas filter (26) and an additional heat exchanger (27') are arranged in a kiln exhaust gas line between the preheating stage (2) and a rawmill (7) for grinding the raw materials.

3. Device according to either claim 1 or claim 2, **characterised in that** a hot-gas filter (19) and an additional heat exchanger (27"') are arranged in a bypass line (16) in order to remove chloride loads from a partial flow of the kiln exhaust gases.

4. Device according to any of claims 1 to 3, **characterised in that** a hot-gas filter (5) and an additional heat exchanger (27") are arranged in an exhaust gas line of the clinker cooler (4).

5. Device according to any of claims 1 to 4, **characterised in that** at least two additional heat exchangers (27', 27", 27'"), having hot-gas filters (26, 5, 19) arranged upstream, are provided in the kiln exhaust gas line and/or in the bypass line (16) and/or in the exhaust gas line of the clinker cooler (4), the at least two additional heat exchangers (27', 27", 27"') being connected to the heat exchanger (25), upstream of the nitrogen oxide removal stage (23), by portions of the line (28', 29'; 28", 29"; 28"', 29"') for the heat-exchange medium.

6. Device according to any of claims 1 to 5, **characterised in that** the kiln exhaust gas line and/or the bypass line (16) and/or the exhaust gas line has a branch for branching off a partial flow of the kiln exhaust gases or the exhaust air to the additional heat exchangers (27', 27", 27"').

7. Device according to claim 6, **characterised in that** the branch is connected to an open-loop or closed-loop control means for adjusting the volume flow rate of the kiln exhaust gases or exhaust gas from the clinker cooler (4) into the branch.

8. Device according to any of claims 1 to 7, **characterised in that** the hot-gas filter comprises at least one filter element (32), through which kiln exhaust gases or exhaust air from the clinker cooler (4) can flow, preferably made of a ceramic material, a plurality of substantially vertical ceramic filter elements (32) preferably being provided.

9. Device according to claim 8, **characterised in that** the hot-gas filter (26, 5, 19) is connected to a discharge member (33) for discharging dust which has collected on the filter element (32).

10. Device according to either claim 8 or claim 9, **characterised in that** the hot-gas filter (26, 5, 19) comprises a supply for clean gas for dedusting the filter element (32).

## Revendications

1. Dispositif pour la fabrication de clinker de ciment, avec un four (3) pour la combustion de matières premières afin d'obtenir du clinker de ciment, avec un étage de préchauffage (2) pour le préchauffage des matières premières à contre-courant de gaz d'échappement du four, avec un refroidisseur de clinker (4) pour le refroidissement du clinker de ciment, un étage de dénitrification (23) pour la dénitrification des gaz d'échappement du four, avec un échangeur thermique (25) pour le chauffage des gaz d'échappement du four avant l'étage de dénitrification (23) par échange thermique avec un support d'échange thermique, avec au moins un autre échangeur thermique (27', 27", 27"') pour le chauffage du support d'échange thermique par échange thermique avec les gaz d'échappement du four ou l'air vicié du refroidisseur de clinker (4), l'échangeur thermique (25) étant relié, par l'intermédiaire d'une conduite (28', 29' ; 28", 29" ; 28"', 29"') pour le support d'échange thermique, avec l'autre échangeur thermique (27', 27", 27"'), **caractérisé en ce qu'**un filtre à gaz chauds (26, 5, 19) est disposé avant l'autre échangeur thermique (27', 27", 27'") dans la direction d'écoulement.

2. Dispositif selon la revendication 1, **caractérisé en ce qu'**un filtre à gaz chauds (26) et un autre échangeur thermique (27') sont disposés dans une conduite de gaz d'échappement du four entre l'étage de préchauffage (2) et un broyeur brut (7) pour le broyage des matières premières.

3. Dispositif selon la revendication 1 ou 2, **caractérisé en ce qu'**un filtre à gaz chauds (19) et un autre échangeur thermique (27"') sont disposés dans une conduite de dérivation (16) pour l'élimination des charges de chlorures dans un écoulement partiel des gaz d'échappement du four.

4. Dispositif selon l'une des revendications 1 à 3, **caractérisé en ce qu'**un filtre à gaz chauds (5) et un autre échangeur thermique (27") sont disposés dans une conduite d'air vicié du refroidisseur de clinker (4).

5. Dispositif selon l'une des revendications 1 à 4, **caractérisé en ce qu'**au moins deux autres échangeur thermiques (27', 27", 27"') avec des filtres à gaz chauds (26, 5, 19) montés en amont sont prévus dans la conduite de gaz d'échappement du four et/ou dans la conduite de dérivation (16) et/ou dans la conduite d'air vicié du refroidisseur de clinker (4), les au moins deux autres échangeurs thermiques (27', 27", 27"') étant reliés par l'intermédiaire de portions de la conduite (28', 29' ; 28", 29" ; 28"', 29"') pour le milieu d'échange thermique avec l'échangeur thermique (25) avant l'étage de dénitrification (23).

6. Dispositif selon l'une des revendications 1 à 5, **caractérisé en ce que** la conduite de gaz d'échappement du four et/ou la conduite de dérivation (16) et/ou la conduite d'air vicié comprend un embranchement pour la bifurcation d'un écoulement partiel des gaz d'échappement du four ou de l'air vicié vers les autres échangeurs thermiques (27', 27", 27"').

7. Dispositif selon la revendication 6, **caractérisé en ce que** l'embranchement est relié avec un dispositif de commande ou de régulation pour le réglage du débit volumique des gaz d'échappement du four ou de l'air vicié du refroidisseur de clinker (4) dans l'embranchement.

8. Dispositif selon l'une des revendications 1 à 7, **caractérisé en ce que** le filtre à gaz chauds comprend au moins un élément filtrant (32) pouvant être traversé par des gaz d'échappement du four ou l'air vicié du refroidisseur de clinker (4), de préférence constitué d'un matériau de type céramique, de préférence plusieurs éléments filtrants en céramique (32), disposés de manière globalement verticale, étant prévus.

9. Dispositif selon la revendication 8, **caractérisé en ce que** le filtre à gaz chauds (26, 5, 19) est relié avec un organe d'évacuation (33) pour l'évacuation de la poussière déposée sur l'élément filtrant (32).

10. Dispositif selon la revendication 8 ou 9, **caractérisé en ce que** le filtre à gaz chauds (26, 5, 19) comprend une alimentation pour un gaz épuré pour le nettoyage de l'élément filtrant (32).
